# EUROPEAN PATENT APPLICATION

(11) **EP 4 151 126 A1**
(43) Date of publication of application: **22.03.2023**
(21) Application number: 21197645.1
(22) Date of filing: 20.09.2021
(51) Int. Cl.: A47B 77/14, G06F 1/16, A47B 23/00

(54) **DOCKING STATION FOR A CABINET OR SHELF**

(71) Applicant: BSH Hausgeräte GmbH, 81739 München (DE)
(72) Inventor: Sagoo, Kiran Pal, 82256 Fürstenfeldbruck (DE)

(57) **Abstract**

A docking station (170) for an electronic device (320) is described. The docking station (170) comprises an upper side which is configured to attach the docking station (170) to a lower side (300) of a kitchen cabinet (100) or a shelf. Furthermore, the docking station (170) comprises a holder (120) at a lower side of the docking station (170), which is configured to be moved into an inclined orientation; wherein the holder (120) is configured to hold an electronic device (320), when placed in the inclined orientation. The docking station (170) further comprises one or more input elements (104, 105) configured to capture input data regarding a user input for the electronic device (320) placed in the holder (120), and a control unit (106) configured to cause the electronic device (320) to be controlled in dependence of the input data.

## Description

The present document relates to a docking station for an electronic device, which is configured to be attached to a cabinet, in particular to a kitchen cabinet, or to a shelf.

An electronic device, such as a tablet PC or a smartphone, may be used within a household, notably within a kitchen, to provide support for a household task, such as cooking. By way of example, the user may use the electronic device to search for a recipe and to render, e.g., to display, cooking instructions from the recipe. During a cooking process, it may be difficult for the user to interact with the electronic device, as the user may have wet hands.

The present document addresses the technical problem of increasing the comfort of use of an electronic device within a household, in particular within a kitchen. The technical problem is solved by the independent claim. Preferred examples are described in the dependent claims.

According to an aspect, a docking station for an electronic device (e.g., for a tablet PC, for a smartphone, etc.) is described. The docking station comprises an upper side which is configured to attach the docking station to a lower side of a (hanging) cabinet and/or to the lower side of a plank or a shelf (e.g., a book shelf). The docking station may have a cuboid shape (when the holder of the docking station is in the folded and/or horizontal orientation). As such, the docking station may have an upper side and an opposite lower side. Furthermore, the docking station may have a front side (which is facing the user of the docking station) and an opposite back side. In addition, the docking station may have a left and a right side.

The cabinet may be a kitchen cabinet, notably a hanging kitchen cabinet and/or a kitchen cabinet of a fitted kitchen. The cabinet may have the form of a cuboid. The cabinet may comprise side walls which may form a rectangular frame. The side walls of the cabinet may extend away from the wall that the cabinet is attached to and/or placed against. In particular, the side walls of the cabinet may be perpendicular to the wall that the cabinet is attached to and/or placed against. Furthermore, the cabinet may comprise a front panel which may cover the rectangular frame formed by the side walls of the cabinet. The front panel may be parallel to the wall that the cabinet is attached to and/or placed against. The cabinet may have a width of 20cm or more, a height of 20cm or more and/or a depth of 20cm or more. The side walls and/or the front panel of the cabinet may comprise wood. In particular the side walls and/or the front panel may be formed using fibreboard, notably medium-density fibreboard (MDF), and/or (plain) wood.

The docking station may comprise a mounting at the upper side of the docking station, which is configured to attach the docking station to the lower side of a kitchen cabinet.

The docking station comprises a holder at the lower side of the docking station, which is configured to be moved into an inclined orientation. The holder may be configured to hold an electronic device, when placed in the inclined orientation, in particular, such that the display of the electronic device is visible to a user positioned in front of the docking station.

The holder may be dimensioned for (differently sized) electronic devices having a display size of 5 inches or more and/or of 15 inches or less. Furthermore, the holder may be dimensioned for electronic devices having a width (perpendicular to the display) of 2mm or more and/or 15mm or less.

The docking station may be configured to maintain the holder in the inclined orientation, in particular, such that the user may touch the display of the electronic device, without causing the electronic device and/or the holder to move. By doing this, a particularly comfortable interaction with the electronic device is enabled.

The holder may comprise a back support which is configured to be in contact with the back side of the electronic device placed in the holder. The back support may have a planar and/or rectangular shape. The back support may be covered by a skidproof material to maintain the electronic device in a fixed position.

Furthermore, the holder may comprise a protrusion at the lower edge of the back support, which is configured to prevent the electronic device from sliding off of the back support. As a result of this, the electronic device may be placed on the holder in a secure manner.

The upper edge of the back support (opposite of the lower edge of the back support) may be attached to the main body of the docking station via a hinge, such that the back support is rotatably coupled to the main body of the docking station for moving the holder between the horizontal orientation and the inclined orientation. The front side of the main body of the docking station may be designed such that the protrusion at the lower edge of the back support is aligned with the front side of the main body of the docking station, when the holder is positioned in the horizontal orientation. This allows the dimensions of the docking station to be reduced, when the holder for holding an electronic device is not used.

Hence, the holder may be rotatably coupled to the main body of the docking station via a hinge, such that the holder is movable between the horizontal orientation and the inclined orientation. The hinge may be located at the back side of the main body of the docking station. This allows the holder to be folded away (to reduce the required space of the docking station) and to be unfolded when coupling the docking station with an electronic device.

The holder, in particular the back support of the holder, may be arranged in parallel to the upper side of the docking station, when the holder is positioned in the horizontal orientation. Alternatively, or in addition, the holder, in particular the back support of the holder, may form an inclination angle between 30° and 70° with the upper side of the docking station, when the holder is positioned in the inclined orientation. As a result of this, the docking station enables a comfortable interaction with an electronic device.

The docking station, in particular the holder, may comprise charging means configured to electrically charge the electronic device which is placed in the holder. The charging means may comprise a charging coil for wireless charging of the electronic device. As a result of this, the comfort-of-use of the docking station may be increased.

The control unit may be configured to detect that an electronic device has been placed in the holder of the docking station. In reaction to this, the control unit may automatically establish a communication link with the electronic device for allowing the electronic device to interact with the docking station. In particular, the communication link may allow the electronic device to be controlled based on the input data from one or more input elements of the docking station. As a result of this, a particularly comfortable user interaction with the electronic device is enabled.

The docking station typically comprises a communication interface (e.g., a Bluetooth and/or WLAN interface). The communication interface may be configured to establish a communication link with a range that is limited to an area of 50cm or less (or 20cm or less) around the holder. By limiting the range of the communication link, docking may be restricted in a reliable manner to the electronic device which is placed in the holder of the docking station.

The docking station may comprise one or more input elements configured to capture input data regarding a user input for the electronic device placed in the holder. In particular, the docking station may comprise a gesture sensor as an input element, notably at the front side of the docking station, configured to sense gesture data regarding a gesture performed by the user of the docking station as input data. Alternatively, or in addition, the docking station may comprise one or more microphones as an input element, notably at the front side of the docking station, configured to capture acoustic data regarding a voice control command of the user of the docking station as input data. The control unit may be configured to cause the electronic device to be controlled in dependence of the input data, in particular in dependence of the gesture data and/or the acoustic data. As a result of this, a particularly comfortable user interaction with the electronic device is enabled.

The docking station may comprise one or more speakers, notably at the front side and/or at the upper side of the docking station. The control unit may be configured to receive an audio signal from the electronic device placed in the holder of the docking station. Furthermore, the control unit may be configured to cause the audio signal to be rendered by the one or more speakers. Hence, the docking station may be configured to provide the acoustic output of the electronic device, thereby further improving the user interaction with the electronic device.

According to a further aspect, a cabinet (in particular a kitchen cabinet) configured to be attached to and/or to be placed against a wall of a room is described. The cabinet comprises a lower side facing a worktop and/or the floor of the room (in particular, the kitchen). Furthermore, the cabinet comprises a docking station as outlined in the present document, which is attached to the lower side of the cabinet.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figures 1a to 1c show a docking station which is attached to the lower side of a kitchen cabinet;
Figures 2a to 2d show different views of a docking station;
Figures 3a to 3e show different states of a docking station which is attached to a kitchen cabinet; and
Figure 4 shows a use situation of a user interacting with a docking station.

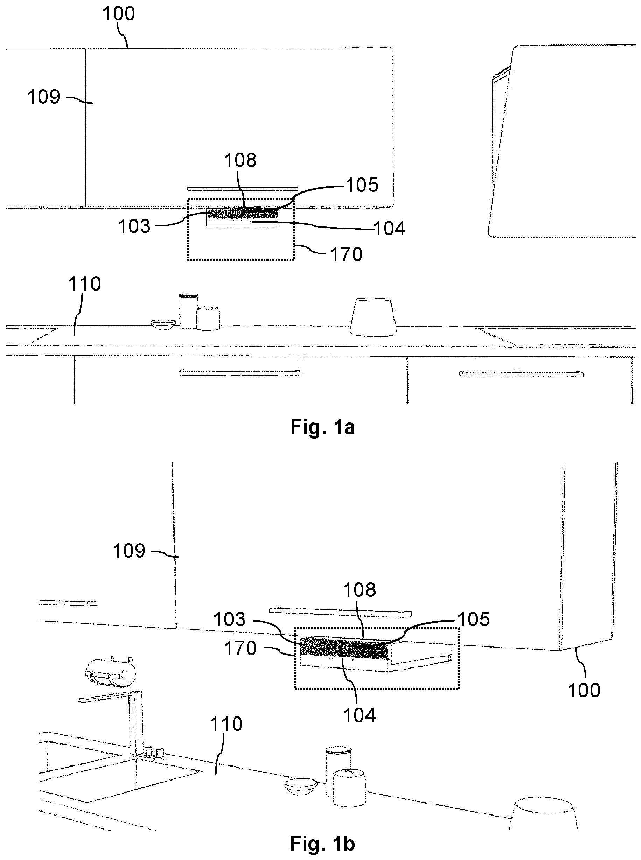

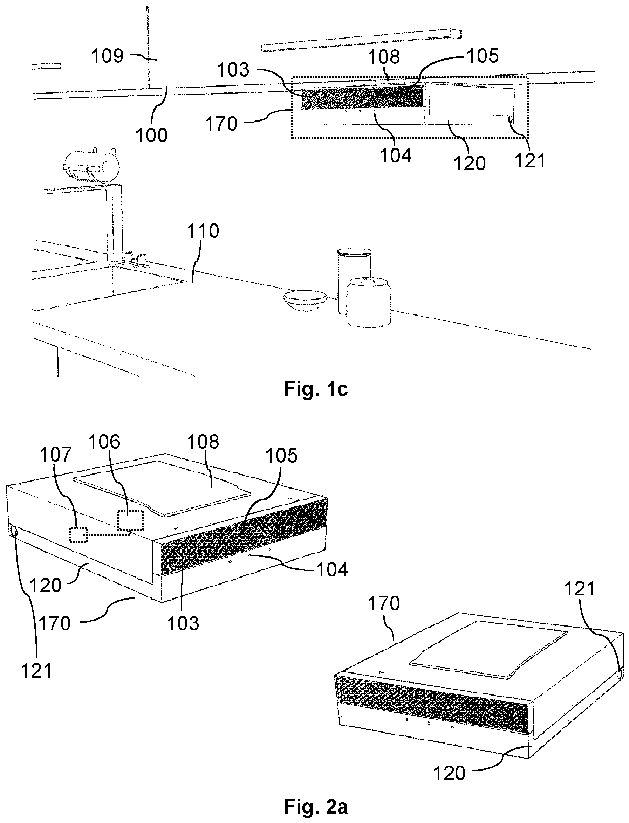

As outlined above, the present document is directed at increasing the comfort of use of a (handheld) electronic device, such as a tablet PC or a smartphone, within a household, in particular within a kitchen. In this context, Figures 1a to 1c illustrate an example of a cabinet 100, in particular a kitchen cabinet, which comprises a docking station 170 for an electronic device. The cabinet 100 may be configured to be attached to a wall above a kitchen worktop 110. The docking station 170 is configured to provide a user interface for an electronic device which is placed within the docking station 170.

As shown in Figs. 1a to 1c, the docking station 170 may be attached to the lower side of the cabinet 100 using a mounting 108 (wherein the lower side of the cabinet 100 is facing the worktop 110). As shown in Figs. 2a to 2d, the docking station 170 may comprise a (wireline and/or wireless) communication interface 107 for interacting and/or communicating with an electronic device that is placed onto the holder 120 of the docking station 170. The communication interface 107 may, e.g., comprise a USB interface.

Alternatively, or in addition, the communication interface 107 may comprise a Bluetooth or a WLAN interface. The docking station 170 may be configured to exchange data with the electronic device via a communication link provided by the communication interface 107.

Furthermore, the docking station 170 may comprise one or more control or input elements which enable a user to control the electronic device. In particular, the docking station 170 may comprise a gesture sensor 105 configured to sense gesture data regarding a gesture, e.g., a hand gesture, which is performed by a user in front of the docking station 170. Alternatively, or in addition, the docking station 170 may comprise one or more microphones 104, e.g., a microphone array, configured to sense acoustic data regarding a voice control command of the user of the electronic device. The gesture sensor 105 and/or the one or more microphones 104 may be located at the front side of the docking station 170. The front side of the docking station 170 may be aligned with the front panel 109 of the cabinet 100, which is facing the user of the cabinet 100, when the docking station 170 is attached to the cabinet 100.

A control unit 106 of the docking station 170 may be configured to process the gesture data and/or the acoustic data, in order to enable gesture control and/or voice control of the electronic device, based on the gesture data and/or the acoustic data. By way of example, the control unit 106 may be configured to send the gesture data and/or the acoustic data (or processed versions of the gesture data and/or the acoustic data) to the electronic device via the communication link provided by the communication interface 107.

In addition, the docking station 170 may comprise one or more speakers 103, notably loudspeakers, which are configured to render an audio signal that is provided by the electronic device. The audio signal may be provided to the control unit 106 via the communication interface 107. Furthermore, the control unit 106 may control rendering of the audio signal using the one or more speakers 103. The speakers 103 may be located at the front of the docking station 170.

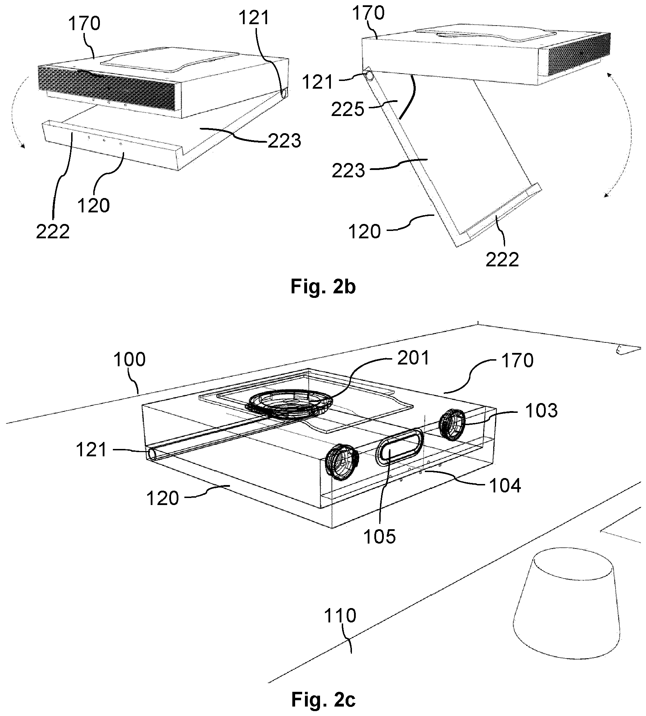

The docking station 170 may have the shape of a cuboid. The mounting 108 for attaching the docking station 170 to the lower side of the cabinet 100 may be located at the upper side of the housing or the main body of the docking station 170. The holder 120 for holding an electronic device may be located at the bottom or lower side of the docking station 170 (which is opposite to the upper side of the docking station 170). The holder 120 may be configured to be unfolded or opened up by turning the holder 120 around a hinge or articulation 121 (which is located at the back side of the docking station 170). As illustrated in Fig. 2b, the holder 120 may comprise a back support 223 for placing the back side of an electronic device. Furthermore, the holder 120 may comprise a protrusion 222 at the lower edge of the back support 223, which is configured to prevent an electronic device from slipping off of the back support 223.

As illustrated in Fig. 2b, the holder 120 of the docking station 170 may be rotated around the hinge 121, wherein the hinge 121 may be located at the back side of the docking station 170, which is turned away from a user facing the front side of the docking station 170. By doing this, the back support 223 may be brought from a horizontal orientation to an inclined orientation. The back support 223 may exhibit an certain inclination angle 225 with respect to the docking station 170, in particular with respect to the upper side of the docking station 170, when the back support 223 is in the inclined orientation. The inclination angle 225 may be between 30° and 70°. The docking station 170, in particular the hinge 121, may be configured to maintain the back support 223 in an inclined orientation with a fixed inclination angle 225. As a result of this, an electronic device may be held by the holder 120 in a reliable and stable manner.

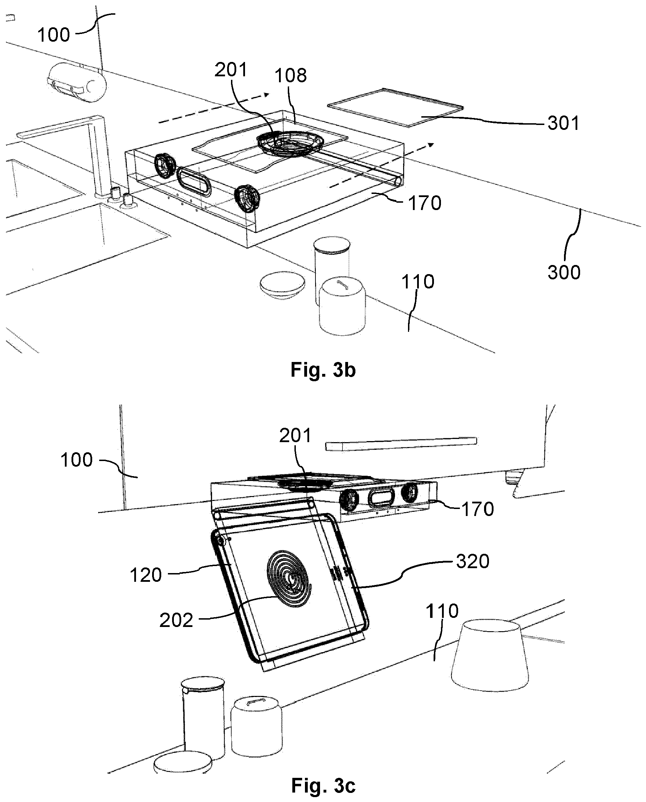

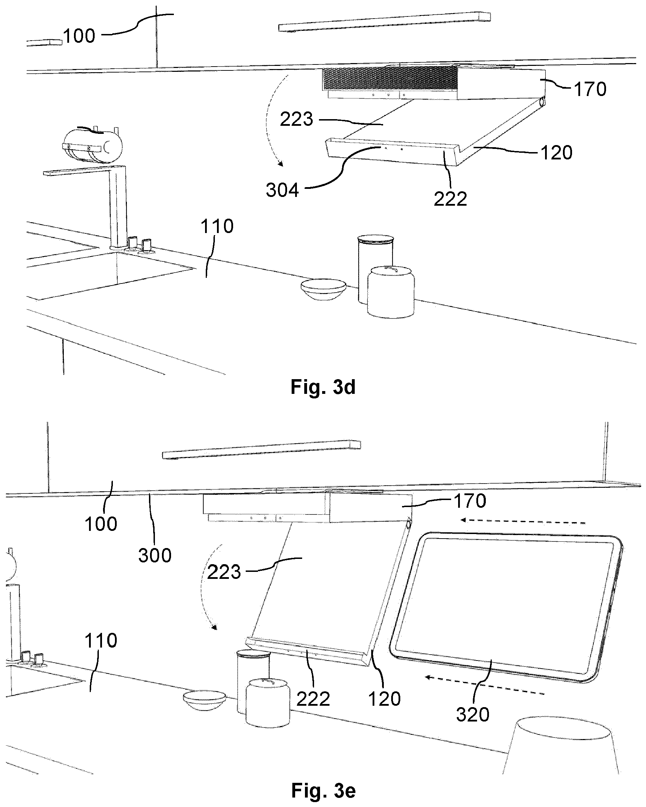

Fig. 3c shows an electronic device 320 which is placed in the unfolded holder 120 of the docking station 170. Fig. 3e illustrates how an electronic device 320 may be slid from the side along a horizontal direction (illustrated by the dotted arrows) onto the back support 223 of the holder 120, such that the electronic device 320 is held in the holder 120 by the back support 223 and by the protrusion 222 on the lower edge of the back support 223. As illustrated in Fig. 3e, the docking station 170 may be attached to the lower side 300 of a cabinet 100.

Fig. 2c shows components at the inside of the docking station 170. In particular, the speakers 103, the microphones 104 and the gesture sensor 105 are illustrated. The docking station 170 may comprise a sub-woofer 201 at the upper side of the docking station 170, thereby increasing the audio quality of the docking station 170.

Furthermore, the docking station 170 may comprise a power supply (not shown). The power supply may be located at the upper side of the docking station 170, such that electric power may be provided to the docking station 170 in an efficient manner via the lower side 300 of the cabinet 100 that the docking station 170 is attached to. Fig. 3b shows a power supply 301 at the lower side 300 of the cabinet 100, which is configured to provide electric power to the power supply of the docking station 170, when the docking station is attached to the lower side 300 of the cabinet 100.

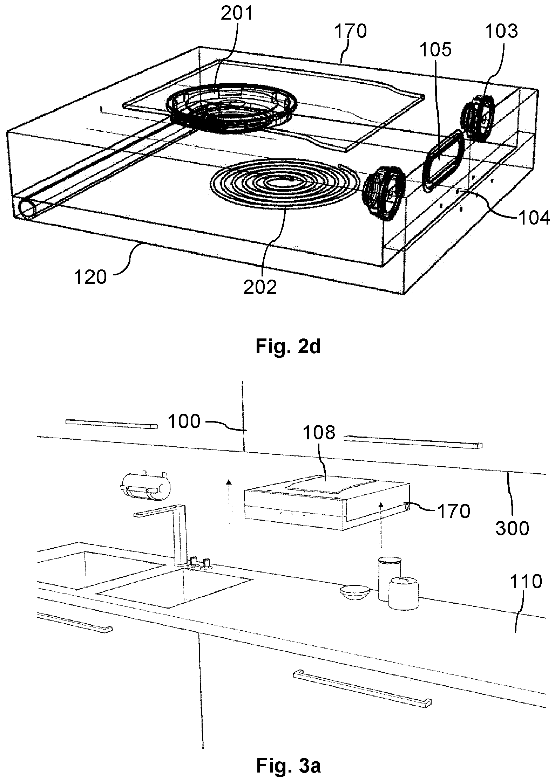

The docking station 170 may comprise charging means 202 for charging an electronic device 320 which is placed in the holder 120 of the docking station 170. As illustrated in Fig. 2d, the charging means 202 may comprise a charging coil which is located within the back support 203 and which is configured to perform wireless charging of the electronic device 320.

Fig. 3a illustrates how the docking station 170 may be attached to the lower side 300 of the cabinet 100 using the mounting 108 at the upper side of the docking station 170.

The holder 200 may be designed such that the protrusion 222 at the lower edge of the back support 223 covers the one or more microphones 104 of the docking station 170, when the back support 223 is in the horizontal orientation. As shown in Fig. 3d, the protrusion 222 may comprise one or more openings 304 for the one or more microphones 104, thereby allowing the one or more microphones 104 to capture acoustic signals in a reliable manner, even when the holder 120 is in the horizontal orientation.

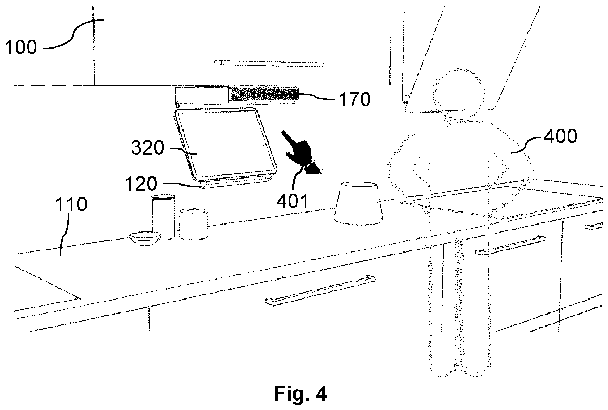

Fig. 4 shows how a user 400 may interact with an electronic device 320 which is placed in the unfolded holder 200 of the docking station 170. In particular, the user 400 may perform gestures using a hand 401. The gestures may be captured using the gesture sensor 105 of the docking station 170. Furthermore, the data regarding the gestures may be passed to the electronic device 302 via the communication interface 107 of the docking station 170.

Hence, a cabinet 100 with a retrofit docking station 170 is described. The docking station 170 may be fitted under the cabinet 100. A user may use the docking station 170 to place a (smart) electronic device 320. The docking station 170 may be configured to be attached, e.g., screwed, under the cabinet 100. The user may flip open the holder 120 and may place the electronic device 320 into the holder 120. The docking station 170 may be configured to automatically detect the user's electronic device 320. This may cause a particular application to be launched automatically on the electronic device 320. As outlined above, the docking station 170 may comprise an integrated speaker 103, a microphone array 104 and/or a gesture sensor 105. The docking station 170 may be used as a speaker (e.g., via a Bluetooth connection), e.g., in combination with voice control.

The retrofit docking station 170 may be configured to be placed anywhere under a kitchen cabinet 100. By doing this, no space is taken up on the kitchen worktop 110. The lower part of the docking station 170 may swivel on a hinge 121 and may be opened to form a holder 120 for an electronic device 320. The docking station 170 may comprise two active speakers 103, one front passive radiator and a (single) sub-woofer 201 on the top wall of docking station 170. Such an arrangement gives a user a true 180+ degree audio output, i.e., an increased audio quality. The lower movable part 223 of the docking station 170 may have an integrated wireless charging coil 202 to enable wireless charging of an electronic device 320 which is placed in the holder 120.

The docking station 170 which is described in the present document can be positioned within a kitchen in a flexible and space-efficient manner. Furthermore, the docking station 170 enables a user to interact with an electronic device 320 in a comfortable and reliable manner, notably when cooking. Furthermore, the docking station 170 allows the electronic device 320 to be stored in a protected position with regards to dirt and/or fluid.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A docking station (170) for an electronic device (320); wherein the docking station (170) comprises,
- an upper side which is configured to attach the docking station (170) to a lower side (300) of a kitchen cabinet (100) or a shelf;
- a holder (120) at a lower side of the docking station (170), which is configured to be moved into an inclined orientation; wherein the holder (120) is configured to hold an electronic device (320), when placed in the inclined orientation, such that a display of the electronic device (320) is visible to a user positioned in front of the docking station (170);
- one or more input elements (104, 105) configured to capture input data regarding a user input for the electronic device (320) placed in the holder (120); and
- a control unit (106) configured to cause the electronic device (320) to be controlled in dependence of the input data.

2. The docking station (170) of claims 1, wherein the holder (120) comprises
- a back support (223) which is configured to be in contact with a back side of the electronic device (320) placed in the holder (120); and
- a protrusion (222) at a lower edge of the back support (223), which is configured to prevent the electronic device (320) from sliding off of the back support (223).

3. The docking station (170) of claims 2, wherein an upper edge of the back support (223) is attached to a main body of the docking station (170) via a hinge (121), such that the back support (223) is rotatably coupled to the main body of the docking station (170) for moving the holder (120) between a horizontal orientation and the inclined orientation.

4. The docking station (170) of claims 3, wherein a front side of the main body of the docking station (170) is designed such that the protrusion (222) at the lower edge of the back support (223) is aligned with the front side of the main body of the docking station (170), when the holder (120) is positioned in the horizontal orientation.

5. The docking station (170) of any previous claims, wherein
- the holder (120) is rotatably coupled to a main body of the docking station (170) via a hinge (121), such that the holder (120) is movable between a horizontal orientation and the inclined orientation; and
- the hinge (121) is located at a back side of the main body of the docking station (170).

6. The docking station (170) of claim 5, wherein
- the holder (120), in particular a back support (223) of the holder (120), is arranged in parallel to the upper side of the docking station (170), when the holder (120) is positioned in the horizontal orientation; and/or
- the holder (120), in particular the back support (223) of the holder (120), forms an inclination angle (225) between 30° and 70° with the upper side of the docking station (170), when the holder (120) is positioned in the inclined orientation.

7. The docking station (170) of any previous claim, wherein the docking station (170) is configured to maintain the holder (120) in the inclined orientation.

8. The docking station (170) of any previous claim, wherein
- the docking station (170), in particular the holder (120), comprises charging means (202) configured to electrically charge the electronic device (320) which is placed in the holder (120); and
- the charging means (202) in particular comprise a charging coil for wireless charging of the electronic device (320).

9. The docking station (170) of any previous claim, wherein the docking station (170) comprises a mounting (108) at the upper side, which is configured to attach the docking station (170) to the lower side (300) of a kitchen cabinet (100).

10. The docking station (170) of any previous claim, wherein the control unit (106) is configured to
- detect that an electronic device (320) has been placed in the holder (120) of the docking station (170); and
- in reaction to this automatically establish a communication link with the electronic device (320) for allowing the electronic device (320) to be controlled based on the input data from the one or more input elements (104, 105) of the docking station (170).

11. The docking station (170) of claim 10, wherein
- the docking station (170) comprises a communication interface (107); and
- the communication interface (107) is configured to establish a communication link with a range that is limited to an area of 50cm or less around the holder (120).

12. The docking station (170) of any previous claim, wherein
- the docking station (170) comprises a gesture sensor (105) as an input element (104, 105), notably at a front side of the docking station (170), configured to sense gesture data regarding a gesture performed by the user of the docking station (170) as input data; and
- the control unit (106) is configured to cause the electronic device (320) to be controlled based on the gesture data.

13. The docking station (170) of any previous claim, wherein
- the docking station (170) comprises one or more microphones (104) as an input element (104, 105), notably at a front side of the docking station (170), configured to capture acoustic data regarding a voice control command of the user of the docking station (170) as input data; and
- the control unit (106) is configured to cause the electronic device (320) to be controlled based on the acoustic data.

14. The docking station (170) of any previous claim, wherein
- the docking station (170) comprises one or more speakers (103), notably at a front side and/or at the upper side of the docking station (170); and
- the control unit (106) is configured to
- receive an audio signal from the electronic device (320) placed in the holder (120) of the docking station (170); and
- cause the audio signal to be rendered by the one or more speakers (103).

15. A cabinet (100) configured to be attached to and/or to be placed against a wall of a room; wherein the cabinet (100) comprises
- a lower side (300) facing a worktop (110) and/or a floor of the room; and
- a docking station (100) according to any previous claim, which is attached to the lower side (300) of the cabinet (100).
